# EUROPÄISCHE PATENTSCHRIFT

(11) **EP 3 431 363 B1**
(45) Veröffentlichungstag und Bekanntmachung des Hinweises auf die Patenterteilung: **31.08.2022**
(21) Anmeldenummer: 18185078.5
(22) Anmeldetag: 23.07.2018
(51) Int. Cl.: B62B 3/10, B62B 3/02, B62B 5/04

(54) **TRANSPORTGESTELL**
TRANSPORT FRAME
CADRE DE TRANSPORT

(30) Priorität: 21.07.2017 DE 102017212614
(43) Veröffentlichungstag der Anmeldung: 23.01.2019
(73) Patentinhaber: Fraunhofer-Gesellschaft zur Förderung der angewandten Forschung e.V., 80686 München (DE); WIE GmbH, 73560 Böbingen/Rems (DE)
(72) Erfinder: Lange, Dr. Volker, 58085 Hagen (DE); Wohlfahrt, Andreas, 59348 Lüdinghausen (DE); Böhmer, Michael, 44265 Dortmund (DE); Döltgen, Martin, 44388 Dortmund (DE); Wiedmann, Dietmar, 73560 Böbingen (DE)
(74) Vertreter: Pfenning, Meinig & Partner mbB

(56) Entgegenhaltungen:
- CN-A- 106 672 038
- DE-A1-102008 012 566
- DE-U1- 8 429 202
- DE-U1-202005 012 280
- DE-U1-202015 008 876
- US-A1- 2006 108 774
- US-A1- 2007 023 126

## Beschreibung

Die Erfindung liegt auf dem Gebiet des Maschinenbaus und der Logistik. Sie kann beispielsweise beim Transport von Fenstern, Fensterglas und anderen Flachmaterialien, jedoch auch für Langgut, wie Rohre, Stangen, Profile und dergleichen, verwendet werden. Die Anwendung der Erfindung auf weiteren Gebieten ist nicht ausgeschlossen.

Um Flachmaterialien, wie beispielsweise Fenster oder Fensterglas, unter Vermeidung des Risikos von Bruch und möglichst platzsparend aufzubewahren und zu transportieren, werden derzeit verschiedene Arten von Gestellen eingesetzt, die es einerseits erlauben, mehrere dieser Elemente aufzunehmen und gemeinsam zu transportieren und die andererseits als Transport-und Aufbewahrungsgestelle wiederverwendbar sind. Typische solche Gestelle werden nach ihrer Form "A-Gestelle" oder "L-Gestelle" genannt und bieten einerseits zum Anlehnen der Flachelemente einen oder mehrere Stützschenkel sowie Tragschenkel, die das Gewicht der zu transportierenden Elemente im Wesentlichen aufnehmen.

Aus der DE 20 2005 012 280 U1 ist ein Transportgestell für Glasscheiben bekannt, bei dem jeweils zwischen Paaren von Stützschenkeln und Tragschenkeln Zahnleisten angeordnet sind, wobei zwischen den Zähnen der Zahnleisten jeweils Aufnahmeräume für Scheiben gebildet sind. Dort sind paarweise verbundene Winkelträger gebildet, bei denen die Scheiben senkrecht zu der durch die Stützschenkel gebildeten Anlagefläche stehen.

Die US 2006/108774 A1 zeigt einen Transportwagen, der von Hand ziehbar ist und der eine vordere und eine hintere horizontale Transportplattform aufweist. Diese sind über mehrere parallele Rohre gegeneinander in Fahrtrichtung des Wagens verschiebbar, um mehr oder weniger lange Teile/Platten aufnehmen zu können.

Die DE 842 92 02 U1 zeigt ein Transportgestell mit mehreren U-förmigen Winkelträgern, die mittels Abstandshaltern miteinander verbunden sind. Das Transportgestell ist stapelbar, und innerhalb des Aufnahmeraums des Transportgestells sind Profilglasbahnen aufnehmbar.

Aus der DE 10 2008 012 566 A1 ist ein fahrbares Traggestell bekannt, das zur Lagerung von Platten vorgesehen ist. Es sind sogenannte Steher vorgesehen, sowie stabförmige Auflageelemente, die sich ausgehend von den Stehern schräg nach oben erstrecken und auf denen Transportgut abgelegt wird. Die Auflageelemente sind in die Steher einsteckbar.

In der Transportlogistik erweist es sich, dass der Raum für die zu transportierenden Güter einerseits nicht immer optimal ausgenutzt wird und andererseits der Rücktransport von leeren Gestellen aufwendig ist.

Der vorliegenden Erfindung liegt daher die Aufgabe zugrunde, Transportgestelle zu schaffen, die die raumsparende Speicherung von zu transportierenden Gütern erlauben und die Wiederverwendung mit minimierten logistischen Anforderungen ermöglichen.

Die Aufgabe wird mit den Merkmalen der Erfindung gemäß Patentanspruch 1 gelöst. Weitere Ausgestaltungen von Transportgestellen sind Gegenstand der Unteransprüche 2 bis 15.

Demgemäß bezieht sich die Erfindung auf ein Transportgestell zum Transport von strangförmigen Elementen (Langgut) oder von Flachelementen, insbesondere Fenstern oder Fensterscheiben, mit wenigstens einem Winkelträger, der einen Tragschenkel und einen Stützschenkel aufweist, wobei das Transportgestell derart eingerichtet ist, dass das Gewicht der zu transportierenden Flachelemente beim Transport überwiegend auf dem/den Tragschenkeln ruht. Bei einem derartigen, an sich bekannten Transportgestell wird die erfindungsgemäße Aufgabe dadurch gelöst, dass zwei, drei oder mehr verschieden lange Tragschenkel an einem Teil des Transportgestells zwischen einer ausgeschwenkten Stellung und einer eingeschwenkten Stellung schwenkbar befestigt sind, wobei die Tragschenkel in der ausgeschwenkten Stellung Flachelemente aufnehmen können und in der eingeschwenkten Stellung an die Stützschenkel angelegt sind.

Die Flachelemente werden üblicherweise, um Durchbiegung und Bruch zu verhindern, im Wesentlichen stehend transportiert, das heißt, dass die größten Außenflächen / Flachseiten im Wesentlichen vertikal ausgerichtet sind. Dabei ist zur seitlichen Stützung an dem oder den Stützschenkeln eine Schrägstellung zwischen 0 und etwa 30 Grad abweichend von der Vertikalen sinnvoll. Die Tragschenkel sind beim Transport der Flachelemente im Wesentlichen horizontal ausgerichtet oder bieten zumindest eine etwa horizontale Stützfläche für die Flachelemente. Diese Stützfläche kann allerdings auch eine Neigung zwischen 0 und etwa 30 Grad gegenüber der Horizontalen derart aufweisen, dass sie zu dem Verbindungsbereich zwischen dem Tragschenkel und dem Stützschenkel hin abfällt. Diese Ausrichtung wirkt dem Verrutschen der Flachelemente entgegen.

Dadurch, dass verschieden lange (beispielsweise 30 cm + 40 cm + 60 cm lange) Tragschenkel wahlweise ausgeschwenkt werden können, kann beispielsweise die Größe der Stellfläche auf dem Tragschenkel, auf der Langgut abgelegt oder Flachelemente abgestellt werden können, individuell angepasst werden. Damit kann auch der Platzbedarf des Transportgestells je nach seiner Befüllung individuell angepasst werden. Für den Fall, dass mehrere Transportgestelle in einem Transportbehälter, beispielsweise einem Container oder auf einem Lkw, transportiert werden, kann auf diese Weise der vorhandene Platz optimal ausgenutzt werden.

Zudem ermöglicht diese Ausgestaltung, dass das jeweilige Transportgestell beim Rücktransport, wenn keine Flachelemente aufgenommen werden müssen, auf eine Minimalgröße zusammengeschoben oder auseinandergenommen werden kann, indem Tragschenkel und Stützschenkel ineinandergeschoben, voneinander getrennt oder aneinander angeklappt werden können. Die Transportgestelle sind somit komprimierbar und können insbesondere im auseinandergenommenen Zustand auch in Einzelteilen leicht getragen werden.

Bei einem Transportgestell können grundsätzlich mehrere Winkelträger parallel zueinander angeordnet und miteinander verbunden sein, um die Flachelemente aufzunehmen, oder es können auch mehrere Winkelträger mit einander zugewandten Tragschenkeln spiegelsymmetrisch bezüglich einer zwischen ihnen liegenden Symmetrieebene derart angeordnet sein, dass sie ein kastenförmiges Gestell zur Aufnahme von Flachelementen bilden.

Eine besondere Ausgestaltung kann vorsehen, dass das Transportgestell wenigstens zwei Winkelträger, insbesondere L-förmige Winkelträger, aufweist, die mit einander zugewandten, parallel zueinander oder teleskopartig ineinandergeschobenen Tragschenkeln miteinander verbunden sind. Damit bilden die beiden Stützschenkel der beiden einander gegenüberliegenden Winkelträger einen Zwischenraum, in dem mehrere Flachelemente oder Langgut aufbewahrt werden können. Die beiden Stützschenkel können dabei beispielsweise parallel zueinander oder V-förmig voneinander weggeneigt angeordnet sein.

Die beiden Tragschenkel können gleich lang oder unterschiedlich lang ausgebildet sein und nebeneinander, übereinander oder teleskopartig ineinandergeschoben gelagert sein. Bei einer Lagerung der Tragschenkel nebeneinander kann die Standfläche für die Flachelemente in einer Ausführungsform durch einen geeigneten Abstand zwischen den Tragschenkeln in einer gewünschten Größe gestaltet werden.

Eine weitere Ausgestaltung der Erfindung kann vorsehen, dass ein Transportgestell wenigstens zwei Winkelträger aufweist, die im Abstand voneinander angeordnet sind, wobei jeweils die Tragschenkel und die Stützschenkel parallel zueinander angeordnet sind und wobei jeweils zwei Stützschenkel und/oder zwei Tragschenkel mittels wenigstens eines bezüglich seiner Länge einstellbaren Abstandshalters miteinander verbunden sind.

Diese Ausgestaltung kann beispielsweise auch vorsehen, dass zwei Stützschenkel auf derselben Seite der Tragschenkel nebeneinander derart angeordnet sind, dass sich beide Tragschenkel von einer Verbindungslinie, die die beiden Stützschenkel miteinander verbindet, weg erstrecken. Die beiden Winkelträger können auf diese Weise in jeweils gleicher Orientierung aneinandergereiht werden und derart eine verlängerte Winkelträgeranordnung bilden. Es kann in derselben Weise auch eine Reihung von mehr als zwei Winkelträgern nebeneinander vorgesehen sein, beispielsweise wenn die zu transportierenden Flachelemente oder das zu transportierende Langgut eine bestimmte Mindestlänge aufweisen. Auf diese Weise kann das Gewicht der Flachelemente bzw. des Langguts auf eine Mehrzahl von Tragschenkeln von verschiedenen Winkelträgern verteilt werden.

Die nebeneinander angeordneten Tragschenkel der Winkelträger können untereinander lösbar in einem festen Abstand miteinander verbunden werden. Diese Verbindung kann zum Abbauen eines Traggestells lösbar sein. Die Stützschenkel der nebeneinander angeordneten Winkelträger können ebenso auf lösbare Art miteinander verbindbar oder verbunden sein.

Eine weitere Ausgestaltung eines Transportgestells kann vorsehen, dass der/die Abstandshalter teleskopartig ausziehbar ist/sind. Es können auch zwischen den Tragschenkeln einerseits und zwischen den Stützschenkeln andererseits jeweils separate Abstandshalter vorgesehen sein, die auch jeweils bezüglich ihrer Länge separat einstellbar sind.

Eine weitere Ausgestaltung der Erfindung kann vorsehen, dass wenigstens vier Winkelträger vorgesehen sind, die paarweise mit einander zugewandten, parallel zueinander oder teleskopartig ineinandergeschobenen Tragschenkeln miteinander verbunden sind, wobei jeweils Paare von Winkelträgern mittels wenigstens eines bezüglich seiner Länge einstellbaren Abstandshalters miteinander verbunden sind. Diese Ausgestaltung sieht eine Anzahl von mindestens vier Winkelträgern vor, von denen jeweils zwei spiegelsymmetrisch einander gegenüberliegend angeordnet sind, mit einander zugewandten Tragschenkeln, wodurch zwei Paare von Winkelträgern gebildet sind. Diese beiden Paare können derart nebeneinander angeordnet werden, dass die Tragschenkel aller Winkelträger parallel zueinander angeordnet sind und die Stützschenkel vier Kanten eines zwischen den Trägern begrenzten quaderförmigen Volumens bilden. Damit ist ein Raum geschaffen, in dem zu transportierende Flachelemente bzw. Langgut derart abgestellt/abgelegt werden können, dass sie zu allen Seiten hin abgestützt sind.

Es kann zudem vorgesehen sein, dass wenigstens ein, insbesondere zwei oder mehr Abstandshalter jeweils als Stützkreuz mit zwei mittels eines Drehgelenks gelenkig miteinander verbundenen Abstandsarmen ausgebildet ist/sind. Die Abstandshalter können zwischen den Stützschenkeln und/oder zwischen den Tragschenkeln zur Einstellung des Abstands zwischen benachbarten Winkelträgern vorgesehen sein. Durch Drehung der beiden Abstandsarme gegeneinander können mittels eines solchen Stützkreuzes unterschiedliche Abstände zwischen benachbarten Winkelträgern eingestellt werden. Es sind entsprechend unterschiedliche Befestigungspunkte eines Stützkreuzes an den Schenkeln der Winkelträger vorgesehen.

Es kann insbesondere vorgesehen sein, dass jeder der Winkelträger eine Mehrzahl von voneinander entlang der Länge eines Stützschenkels oder eines Tragschenkels beabstandeten Fixierelementen aufweist, die der Verbindung mit einem Tragschenkel oder einem Stützschenkel desselben Winkelträgers oder eines anderen Winkelträgers oder der Verbindung mit einem Abstandshalter in einer von mehreren möglichen Positionen dienen.

Konkreter kann hierzu beispielsweise vorgesehen sein, dass die Fixierelemente Bohrungen, Ausnehmungen, Nuten, Erhebungen, Bolzen, Stifte oder Stege aufweisen oder durch diese gebildet sind.

Die Fixierelemente können zur mittelbaren oder unmittelbaren Fixierung/ Verbindung von parallelen Schenkeln verschiedener Winkelträger dienen, oder zur Verbindung der verschiedenen Schenkel mittels Abstandshaltern, wie beispielsweise den erwähnten Stützkreuzen. Es können als Abstandshalter auch Bleche, Stangen oder Rohre vorgesehen sein.

Eine weitere Ausgestaltung kann beispielsweise vorsehen, dass die Tragschenkel und/oder die Stützschenkel Fußelemente zur Beabstandung von einer Aufstellfläche aufweisen. Derartige Fußelemente erlauben die Anordnung der Tragschenkel oberhalb in einem gewissen Mindestabstand von einer Aufstellfläche, so dass Hebezeuge, beispielsweise Zinken eines Gabelstaplers, zur Handhabung der Traggestelle unter die Tragschenkel geschoben werden können. Fußelemente können dabei eine Hinterschneidung und/oder eine klauenförmige Struktur aufweisen, die der Sicherung an einem Zinken eines Hebezeugs, beispielsweise eines Gabelstaplers, dient, so dass das Traggestell nicht nach oben von einem Tragelement/Zinken abheben kann.

Die Form der Fußelemente kann ein Umfahren von Zinken, beispielsweise eines Hubwagens aus mehreren Richtungen, ermöglichen.

In einer vorteilhaften Ausbildung der Erfindung kann vorgesehen sein, dass die Tragschenkel und/oder die Stützschenkel jeweils als Hohlprofile, insbesondere als Rechteck-Hohlprofile oder als U-Profile oder L-Profile, ausgebildet sind.

Für eine besonders einfache Handhabbarkeit und Einstellbarkeit der Tragschenkel kann beispielsweise vorgesehen sein, dass jeweils zwei Tragschenkel teleskopartig ineinander oder horizontal nebeneinander angeordnet sind und jeweils durchgehende, miteinander fluchtende Bohrungen aufweisen, die gemeinsam zur Fixierung von stabförmigen Elementen, insbesondere Schrauben oder Bolzen, durchsetzt sind. Auf diese Weise können zwei einander gegenüberliegende Winkelträger einfach zur Einstellung des richtigen Abstands zwischen den Stützschenkeln zusammengeschoben und fixiert werden. Zum Leertransport bzw. einer volumenoptimierten Rückführung, aber auch Lagerung, kann die Fixierung gelöst werden, die Tragschenkel können voneinander entfernt werden, und die Winkelträger können platzsparend gestapelt bzw. aufbewahrt/gelagert werden.

Zudem kann für eine bessere Handhabbarkeit vorgesehen sein, dass die Stützschenkel Kranösen aufweisen oder mit Kranösen aufweisenden Elementen verbunden sind.

Eine bessere Fahrbarkeit auf einer Abstellfläche kann dadurch gewährleistet werden, dass ein Fahrgestell mit Rollen oder Vorrichtungen mit oder zur Befestigung von Tragrollen an den Tragschenkeln vorgesehen sind.

Hierzu kann zudem in die Winkelträger oder in die Transportgestelle eine Hubvorrichtung integriert werden, die die Verlagerung der Traglast auf Tragrollen ermöglicht. Die Tragrollen sind in diesem Fall beispielsweise an einem Hebel befestigt, der am Lasttransportgestell angelenkt ist, wobei die Rollen in einer ersten Stellung des Hebels derart angehoben sind, dass sie keine tragende Funktion haben, und wobei die Rollen in einer zweiten Stellung des Hebels abgesenkt werden können, so dass die Last des Transportgestells auf den Rollen lagert. Damit wird die Notwendigkeit zusätzlicher Hebezeuge zum Rangieren von Transportgestellen hinfällig.

Eine weitere Ausgestaltung des Transportgestells kann derart gestaltet sein, dass an einem Teil des Transportgestells, insbesondere an einem oder mehreren Tragschenkeln, jeweils eine oder mehrere Rollen befestigt ist/sind, wobei jede der Rollen zwischen einer ersten Stellung und einer zweiten Stellung schwenkbar ist, wobei in der ersten Stellung die Rotationsachse der jeweiligen Rolle horizontal gerichtet und das Transportgestell fahrbar ist und in der zweiten Stellung die Rotationsachse der jeweiligen Rolle vertikal gerichtet ist. In der zweiten Stellung können die Rollen flach zwischen den Tragschenkeln platzsparend angeordnet sein. Das Transportgestell ist dann ortsfest und nicht fahrbar. Die Rollen sind jeweils an Rollenarmen befestigt und gelagert, wobei die Rollenarme an dem Transportgestell schwenkbar gelagert sind.

Es kann bei einem Transportgestell auch vorgesehen sein, dass ein Identifizierungselement in das Transportgestell oder jeweils ein Identifizierungselement in ein Element des Transportgestells integriert oder mit diesem verbunden ist, welches eine Identifizierung des Transportgestells ermöglicht und insbesondere ein RFID-Element, einen Barcode, QR-Code oder einen anderen individualisierten und/oder eineindeutigen Informationsträger aufweist. Damit ist die logistische Handhabbarkeit der Transportgestelle optimiert.

Die Stützschenkel und/oder die Tragschenkel können auf ihrer der Last zugewandten Seite mit Schutzprofilen versehen sein. Solche Schutzprofile können beispielsweise aus einem elastischen, weicheren Werkstoff bestehen als die Stützschenkel und die Tragschenkel, beispielsweise aus einem Kunststoff, aus Holz oder aus einem Elastomer. Damit wird das Transportgut vor Druck- und Stoßauswirkungen geschützt, und zudem kann bei geeigneter Materialwahl, beispielsweise eines Gummis oder eines anderen Elastomers, eine erhöhte Reibung und damit ein besseres Haften der Flachelemente an den Trägern erzeugt werden, so dass ein Verrutschen besser verhindert werden kann.

Es kann zudem vorgesehen sein, dass Vorrichtungen zur Befestigung von Zusatzträgern an den Stützschenkeln vorgesehen sind, wobei die Zusatzträger zur Aufnahme von Werkstücken insbesondere auf der dem Innenraum des Transportgestells abgewandten Seite geeignet sind. Solche Zusatzträger können beispielsweise an der Außenseite der Winkelträger befestigt sein, d. h. an der Seite der Stützschenkel, die von den übrigen Stützschenkeln abgewandt ist, bzw. an der Seite eines Stützschenkels, die von dem Tragschenkel desselben Winkelträgers oder dem zu transportierenden Gut abgewandt ist.

Der Raum an der Außenseite der Transportgestelle ist zunächst frei, so dass dort entweder noch weitere Flachelemente anderer Größe oder gänzlich andere Gegenstände aufgenommen werden können. Beispielsweise kann vorgesehen sein, dass solche Zusatzträger Flachelemente aufnehmen, deren Größe kleiner oder größer ist als die sämtlicher übriger mit einem Transportgestell transportierter Flachelemente.

Im Folgenden wird die Erfindung anhand eines Ausführungsbeispiels in Figuren einer Zeichnung gezeigt und nachfolgend erläutert. Dabei zeigt
- Fig. 1: in einer Seitenansicht ein Transportgestell in konventioneller A-Form,
- Fig. 2: in einer Seitenansicht ein konventionelles Transportgestell in L-Form,
- Fig. 3: in einer dreidimensionalen Ansicht ein Transportgestell mit mehreren Winkelträgern,
- Fig. 4: schematisch in dreidimensionaler Ansicht ein Transportgestell mit vier Winkelträgern,
- Fig. 5: in einer Ansicht ein Transportgestell mit einem breitem Winkelträger,
- Fig. 6: ein Transportgestell mit einem Winkelträger, der einen Stützschenkel und zwei Tragschenkel aufweist,
- Fig. 7 in: einer Seitenansicht einen Winkelträger mit einem schwenkbaren Tragschenkel,
- Fig. 8: einen Winkelträger mit zwei voneinander trennbaren Schenkeln,
- Fig. 9: vier L-förmige Winkelträger, die zu einem Transportgestell zusammengefasst sind oder zusammengefasst werden können,
- Fig. 10: eine mögliche Befestigungsart zweier Tragschenkel nebeneinander in einem Querschnitt,
- Fig. 11: die Befestigung zweier Tragschenkel nebeneinander in einer Draufsicht,
- Fig. 12: die Befestigung zweier Tragschenkel, die teleskopartig ineinandergeschoben sind,
- Fig. 13: einen Teil eines Winkelträgers mit einer Kranöse,
- Fig. 14: einen Teil eines Winkelträgers mit einem an diesem befestigten Kranösenelement,
- Fig. 15 in: einer Draufsicht ein Transportgestell in zusammengelegtem Zustand,
- Fig. 16: einen Winkelträger mit einem Stützschenkel und einem auf diesen aufsteckbaren Tragschenkel in einer dreidimensionalen Ansicht,
- Fig. 17: einen Tragschenkel in einer Querschnittsansicht mit einem Fuß,
- Fig. 18: einen Tragschenkel in einer Querschnittsansicht mit einem Fuß
- in: einer weiteren Bauform,
- Fig. 19: eine Seitenansicht eines Winkelträgers mit einem Fahrgestell,
- Fig. 20: einen Winkelträger mit an diesem befestigten Tragrollen,
- Fig. 21: in einer Seitenansicht in zwei verschiedenen Hubzuständen ein Transportgestell mit einem Hubmechanismus,
- Fig. 22: in einer Querschnittsansicht schematisch einen Tragschenkel mit einem Befestigungselement in Form einer Schraube und einer Mutter und mit Füßen in einer ersten Bauform,
- Fig. 23: in einer Querschnittsansicht einen Tragschenkel mit Füßen in einer zweiten Bauform,
- Fig. 24: in einer Querschnittsansicht einen Tragschenkel mit Füßen in einer dritten Bauform,
- Fig. 25: zwei nebeneinander angeordnete Tragschenkel in einer Querschnittsansicht mit Befestigungslaschen,
- Fig. 26: die zwei Tragschenkel aus Figur 25 in dem miteinander verbundenen Zustand,
- Fig. 27: ein gefülltes Transportgestell mit einem ersten Spanngurt,
- Fig. 28: ein gefülltes Transportgestell mit einem zweiten Spanngurt,
- Fig. 29: ein Transportgestell mit einem dritten Spanngurt,
- Fig. 30: einen Winkelträger eines Transportgestells mit Schutzprofilen,
- Fig. 31: ein Transportgestell mit Zusatzträgern,
- Fig. 32: ein Transportgestell mit zwei Winkelträgern, die in einer ersten Aufbauform zusammengefügt sind,
- Fig. 33: ein Transportgestell mit zwei Winkelträgern, die in einer zweiten Aufbauform zusammengefügt sind,
- Fig. 34: ein Transportgestell mit wenigstens einem L-förmigen Winkelträger,
- Fig. 35: einen winkelsteifen Winkelträger,
- Fig. 36: einen Winkelträger mit schräggestelltem Stützschenkel,
- Fig. 37: einen Winkelträger mit einem ausschwenkbaren Abstandshalter zum Anlehnen des Transportgutes,
- Fig. 38: ein Transportgestell in perspektivischer Darstellung,
- Fig. 39: ein Transportgestell ähnlich dem aus Fig. 38 in etwas gedrehter Ansicht mit teilweise ausgeschwenkten Tragschenkeln,
- Fig. 40: einen Teil eines Transportgestells mit mehreren unterschiedlich langen, ausgeschwenkten Transportschenkeln,
- Fig. 41: einen Teil eines Transportgestells mit zwei Stützschenkeln und einem Abstandshalter zwischen diesen, wobei das Transportgestell auf Füßen ruht,
- Fig. 42: einen Teil eines Transportgestells, das auf Rollen ruht,
- Fign. 43, 45: mehrere Stützschenkel eines Winkelträgers mit einem ausziehbaren Stützschenkel und mehreren unterschiedlich langen, eingeschwenkten Tragschenkeln,
- Fign. 44, 46: mehrere Stützschenkel eines Winkelträgers, wobei ein ausziehbarer Stützschenkel zur Verlängerung des Transportgestells ausgezogen ist,
- Fig. 47: schematisch ein Transportgestell im platzsparend zusammengeklappten Zustand,
- Fig. 48: schematisch ein Transportgestell im auseinandergeklappten Zustand, bereit zur Verwendung,
- Fig. 49: ein Detail eines Transportgestells im Bereich der Tragschenkel mit ausgeschwenkten Rollen sowie
- Fig. 50: die Rollen aus Fig. 49 in der eingeschwenkten Stellung.

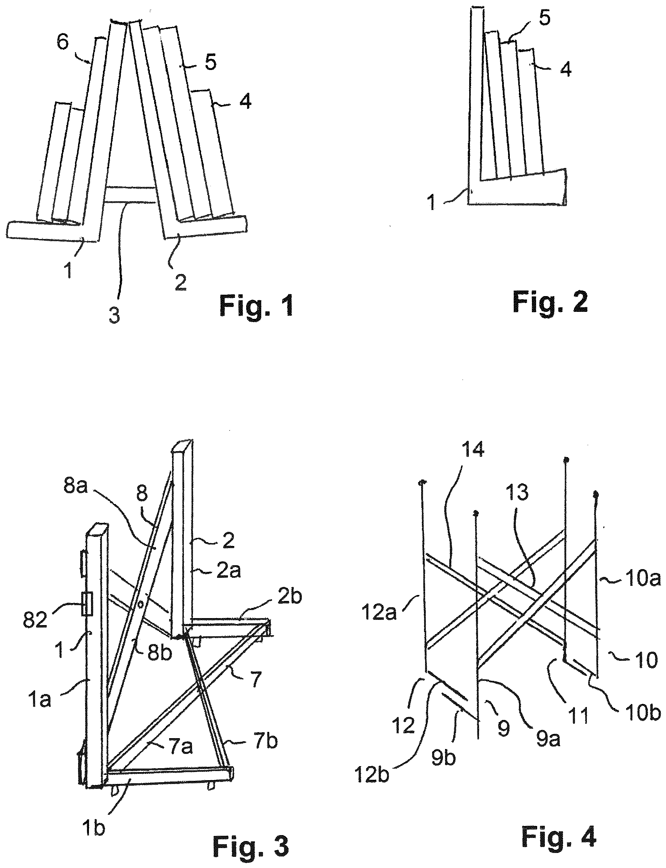

Figur 1 zeigt in einer Seitenansicht ein Transportgestell gemäß dem Stand der Technik mit zwei Winkelträgern 1, 2, die jeweils eine L-Form aufweisen und fest miteinander verbunden sind. Zur Stützung ist eine Traverse 3 eingefügt. Auf dem Transportgestell sind Flachelemente 4, 5, 6 in Form von Fenstern dargestellt.

Figur 2 zeigt ein bekanntes Transportgestell in Form eines L-förmigen Winkelträgers 1, dessen äußere Form unveränderlich ist. Ein solcher Träger beansprucht beim Leertransport etwa denselben Raum wie beim Transport von Flachelementen 4, 5.

In Figur 3 ist in einer dreidimensionalen Darstellung ein Transportgestell mit zwei Winkelträgern 1, 2 dargestellt, von denen jedes einen vertikal angeordneten Stützschenkel 1a, 2a sowie einen horizontal angeordneten Tragschenkel 1b, 2b aufweist. Jeweils der Tragschenkel und der Stützschenkel eines Winkelträgers können fest und starr miteinander verbunden sein oder gegeneinander, wie weiter unten noch näher dargestellt, schwenkbar oder voneinander separierbar sein.

Die beiden Winkelträger 1, 2 sind in verstellbarem Abstand voneinander parallel zueinander angeordnet, so dass sie ein Transportgestell bilden, auf dem Flachelemente abgestellt werden können. Die Flachelemente sollen im Transportzustand auf den Tragschenkeln 1b, 2b abgestellt und an die Stützschenkel 1a, 2a angelehnt sein.

Die beiden Winkelträger 1, 2 sind mit einem oder zwei Stützkreuzen 7, 8 zwischen den Tragschenkeln und/oder zwischen den Stützschenkeln miteinander verbunden, wobei die Stützkreuze 7, 8 jeweils gegeneinander schwenkbare Schenkel 7a, 7b, 8a, 8b aufweisen, so dass zwischen den Winkelträgern 1, 2 verschiedene Abstände durch mehr oder weniger weites Aufklappen der Stützkreuze 7, 8 hergestellt werden können.

Es kann auch vorgesehen sein, dass die Stützschenkel als Arme eines Stützkreuzes zwischen den Tragschenkeln ausgebildet und gegenüber den Tragschenkeln schwenkbar und schräggestellt sind.

Die Stützkreuze können mit den freien Enden der Schenkel 7a, 7b, 8a, 8b an verschiedenen Fixierstellen der Tragschenkel oder Stützschenkel 1a, 1b, 2a, 2b befestigt werden, um die Schenkel der Winkelträger gegeneinander zu verschieben.

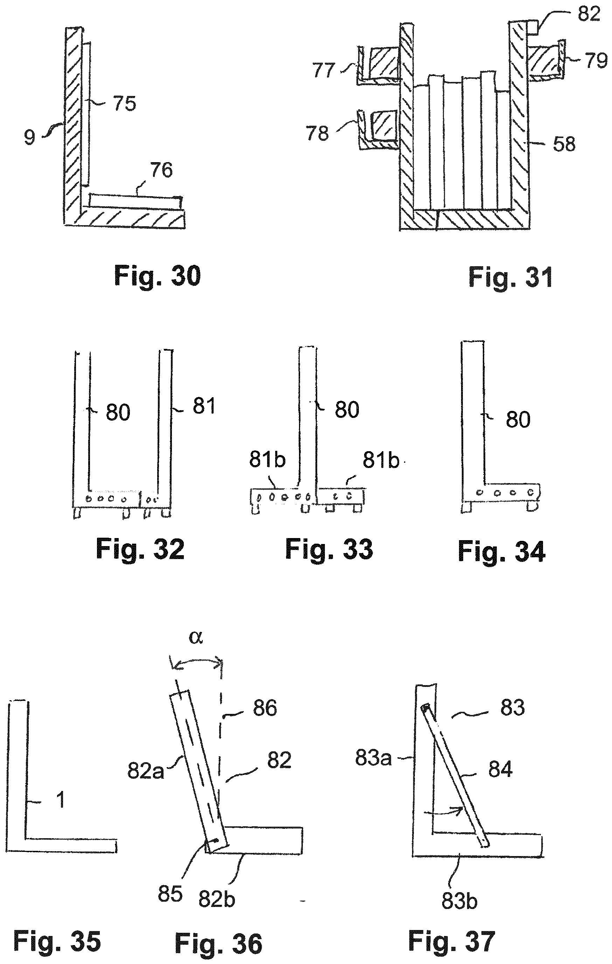

Die Figur 3 zeigt (ebenso wie die Figur 31) auch ein Identifizierungs- und/oder Sensorelement 82, das als RFID-Chip oder auch als voll sende- und empfangsfähiger Transponder ausgebildet sein und die Lokalisierung sowie die Kontrolle von Transportwegen ermöglichen kann. Es können auch für mehrere Elemente des Transportgestells jeweils eigene, jeweils einem Element zugeordnete, Identifizierungselemente vorgesehen sein.

Figur 4 zeigt ein Transportgestell mit vier Winkelträgern in schematischer Form. Die Winkelträger sind mit 9, 10, 11, 12 bezeichnet und weisen jeweils einen Stützschenkel 9a, 10a, 11a, 12a und einen Tragschenkel 9b, 10b, 11b, 12b auf. Die Winkelträger 9, 10, 11, 12 sind paarweise nebeneinander angeordnet, und die beiden Paare von Winkelträgern sind spiegelsymmetrisch mit einander zugewandten Tragschenkeln angeordnet, so dass zwischen den vier Stützschenkeln 9a, 10a, 11a, 12a der Winkelträger 9, 10, 11, 12 ein Volumen zur Aufnahme von Flachelementen gebildet ist. Die Flachelemente werden dabei auf die Tragschenkel 9b, 10b, 11b, 12b der Winkelträger 9, 10, 11, 12 gestellt. Die Stützschenkel der Winkelträger 9, 10, 11, 12 sind jeweils paarweise mittels Stützkreuzen 13, 14 miteinander verbunden, so dass sich der Abstand zwischen den Winkelträgern 9 und 10 einerseits und den Winkelträgern 11 und 12 andererseits einstellen und dann fixieren lässt. Die Tragschenkel 9b, 12b und die Tragschenkel 10b, 11b sind jeweils miteinander verbunden, und es ist auch denkbar, ein abstandhaltendes Stützkreuz zwischen den Tragschenkeln 9b, 12b einerseits und den Tragschenkeln 10b, 11b andererseits zu befestigen.

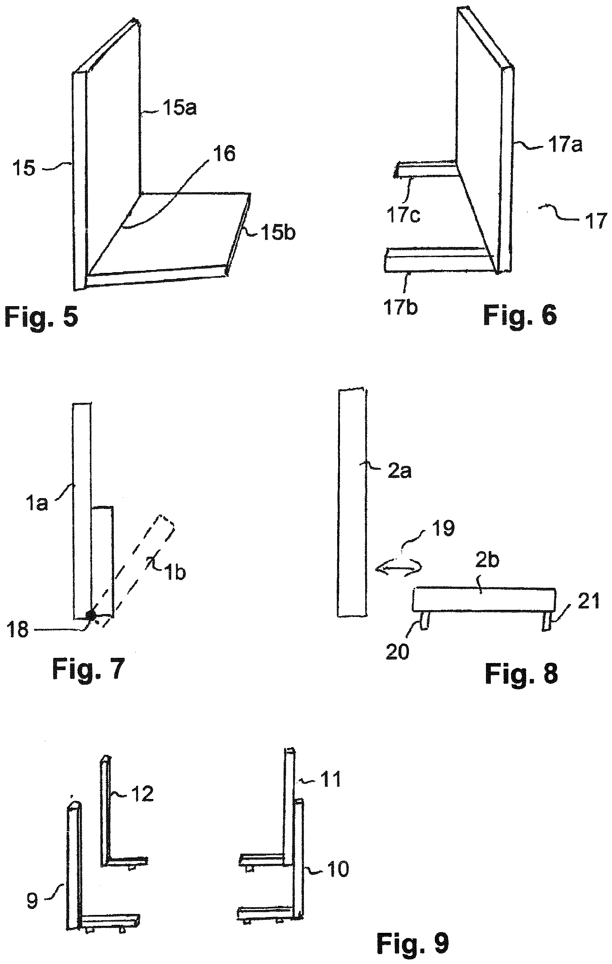

In Figur 5 ist ein einzelner Winkelträger 15 dargestellt, der ein Transportgestell bildet. Der Winkelträger ist mit einem derart breiten Tragschenkel 15b und Stützschenkel 15a versehen, dass Flachelemente vollständig darauf abgestellt werden können. Die Breite des Tragschenkels und des Stützschenkels 15a, 15b wird in Richtung parallel zu der Kante 16 gemessen, entlang deren der Tragschenkel und der Stützschenkel aneinander angrenzen. Der Winkelträger 15 ist dadurch platzsparend unterzubringen, dass beispielsweise der Tragschenkel 15b vom Stützschenkel 15a separierbar oder an diesen anklappbar ist.

Figur 6 zeigt eine Aufbauvariante, bei der ein breiter Stützschenkel 17a mit zwei Tragschenkeln 17b, 17c verbunden ist. Die Tragschenkel 17b, 17c können von dem Stützschenkel 17a entfernbar oder an diesen anklappbar sein. Der Winkelträger 17 kann mit dem Winkelträger 15 aus Figur 5 derart zu einem weiteren Transportgestell zusammengebaut werden, dass die Tragschenkel 17b, 17c in einen oder mehrere Hohlräume innerhalb des Tragschenkels 15b des Winkelträgers 15 einschiebbar sind. Der Winkelträger 17 kann aber auch für sich schon ein Transportgestell bilden.

In Figur 7 ist beispielhaft ein Winkelträger in einer Seitenansicht dargestellt, wobei der Stützschenkel 1a mit dem Tragschenkel 1b mittels eines Schwenkgelenks 18 derart verbunden ist, dass der Tragschenkel 1b gegenüber dem Stützschenkel 1a schwenkbar ist. Der Tragschenkel 1b ist in einer angeklappten Position dargestellt, sowie in einer abgeklappten Position in gestrichelter Form.

Figur 8 zeigt einen Winkelträger mit einem Stützschenkel 2a, an dem ein Tragschenkel 2b befestigbar ist. Der Tragschenkel 2b kann von dem Stützschenkel 2a in Richtung des Doppelpfeils 19 auch getrennt werden. Zur Befestigung des Tragschenkels 2b an dem Stützschenkel 2a sind verschiedene Befestigungsarten denkbar, wie beispielsweise Verschrauben, Einhaken, eine magnetische Halterung, Aufstecken usw., wozu weiter unten noch einige Beispiele angeführt werden. An dem Tragschenkel 2b sind an seiner Unterseite zwei Füße 20, 21 erkennbar, die einer erhöhten Lagerung des Winkelträgers dienen, so dass der Winkelträger mit seiner Last beispielsweise durch einen Gabelstapler leicht aufnehmbar ist.

Figur 9 zeigt in einer perspektivischen Ansicht vier Winkelträger 9, 10, 11, 12, die derart angeordnet sind, dass ihre horizontal ausgerichteten Tragschenkel paarweise einander zugewandt sind. Zum Zusammenfügen eines Transportgestells können die Winkelträger 9, 10, 11, 12 derart aufeinander zu geschoben werden, dass sich der Winkelträger 9 dem Winkelträger 10 und der Winkelträger 12 dem Winkelträger 11 nähert. Die jeweils zugeordneten Tragschenkel können dabei parallel zueinander nebeneinander angeordnet und miteinander verbunden oder auch teleskopartig ineinandergeschoben werden.

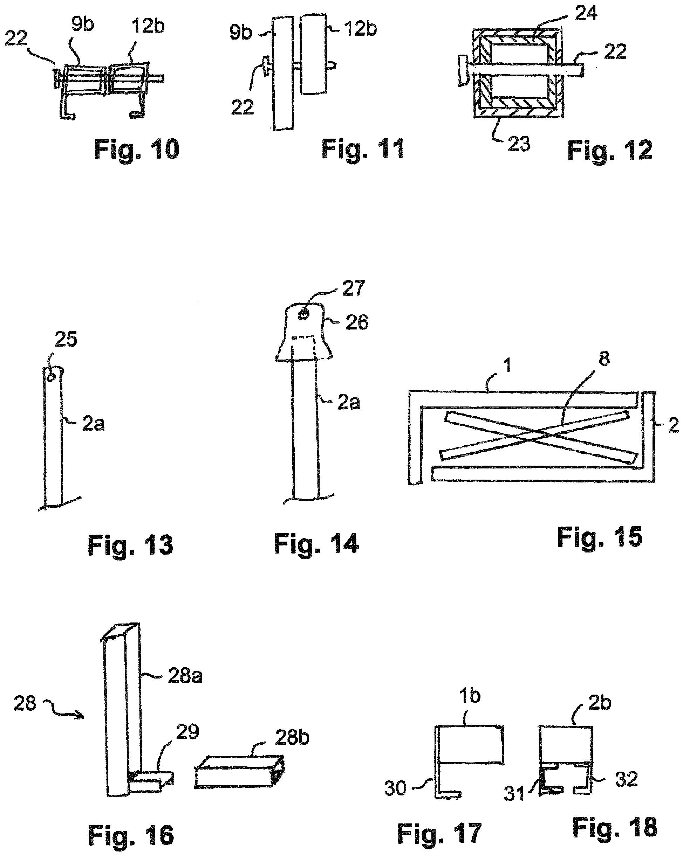

Figur 10 zeigt in einem Querschnitt eine Variante, bei der zwei Tragschenkel 9b, 12b (vgl. auch die Bezeichnung in Figur 4) parallel zueinander angeordnet und mittels eines durchgehenden Stifts oder einer Schraube 22 miteinander verbunden sind.

Figur 11 zeigt die Verbindung der beiden Tragschenkel 9b, 12b aus Figur 10 in einer Draufsicht.

In Figur 12 ist eine Anordnung im Querschnitt dargestellt, bei der ein im Querschnitt größerer Tragschenkel 23 auf einen im Querschnitt kleiner ausgebildeten Tragschenkel 24 aufgeschoben bzw. der kleinere Tragschenkel 24 in den größeren Tragschenkel 23 teleskopartig eingeschoben ist. Die beiden Tragschenkel 23, 24 weisen durchgehende Öffnungen auf, durch die ein Verbindungselement 22 in Form eines Bolzens oder einer Schraube hindurchführbar ist. Dadurch, dass wenigstens einer der Tragschenkel mehrere voneinander beabstandete Bohrungen und / oder Langlöcher aufweist, können verschiedene Bohrungen der Tragschenkel in verschiedenen Relativpositionen fluchtend ausgerichtet und durch einen Stift durchsetzt werden, so dass die Tragschenkel in verschiedenen Ausziehpositionen fixiert werden können.

Figur 13 zeigt einen einzelnen Stützschenkel 2a, an dessen oberem Ende eine Kranöse 25 in Form einer durchgehenden, den Stützschenkel 2 durchsetzenden Öffnung vorgesehen ist. Anstelle der Öse kann auch eine Gewindebohrung oder ein durchgehendes Gewindeloch vorgesehen sein.

Im Vergleich dazu zeigt Figur 14 einen Stützschenkel 2a, an dessen oberem Ende ein Element 26 in Form einer Lasche oder einer Kappe vorgesehen ist, das seinerseits eine Kranöse 27 aufweist. Die Lasche oder Kappe 26 kann fest mit dem Stützschenkel 2a verbunden, jedoch auch mit diesem lösbar verbunden sein, beispielsweise durch einen Bolzen, eine Schraube, ein Seil oder einen Schäkel.

Figur 15 zeigt in einer Seitenansicht zwei Winkelträger 1, 2, die im Transportzustand in leerer Form, d. h. ohne zu transportierende Flachelemente, platzsparend zusammengelegt sind, wobei zwischen ihnen wenigstens ein Stützkreuz 8 angeordnet ist. Auf diese Weise lassen sich Transportgestelle nach dem Transport von Flachelementen zu einem Zielort platzsparend zusammenlegen und zurücktransportieren.

Figur 16 zeigt beispielhaft einen Winkelträger 28 mit einem Stützschenkel 28a, der an seinem unteren Ende einen rechtwinklig abstehenden Ansatzstutzen 29 aufweist. Auf diesen ist ein hohler Tragschenkel 28b möglichst spielfrei aufschiebbar. Der Tragschenkel 28b kann dann an dem Stutzen 29 oder an dem Stützschenkel 28a befestigt werden, um einen Winkelträger zu bilden. Der Tragschenkel 28b kann jederzeit vom Stützschenkel 28a wieder separiert werden, um eine platzsparende Unterbringung des Winkelträgers 28 zu erlauben.

In Figur 17 ist ein Tragschenkel 1b im Querschnitt gezeigt, wobei an dem Tragschenkel 1b ein Fuß 30 in Form eines rechtwinklig abgebogenen Winkelstücks befestigt ist.

Figur 18 zeigt einen Tragschenkel 2b, der als Fuß zwei spiegelsymmetrisch an der Unterseite des Tragschenkels befestigte rechtwinklig nach innen aufeinander zu abgebogene Winkelstücke 31, 32 aufweist.

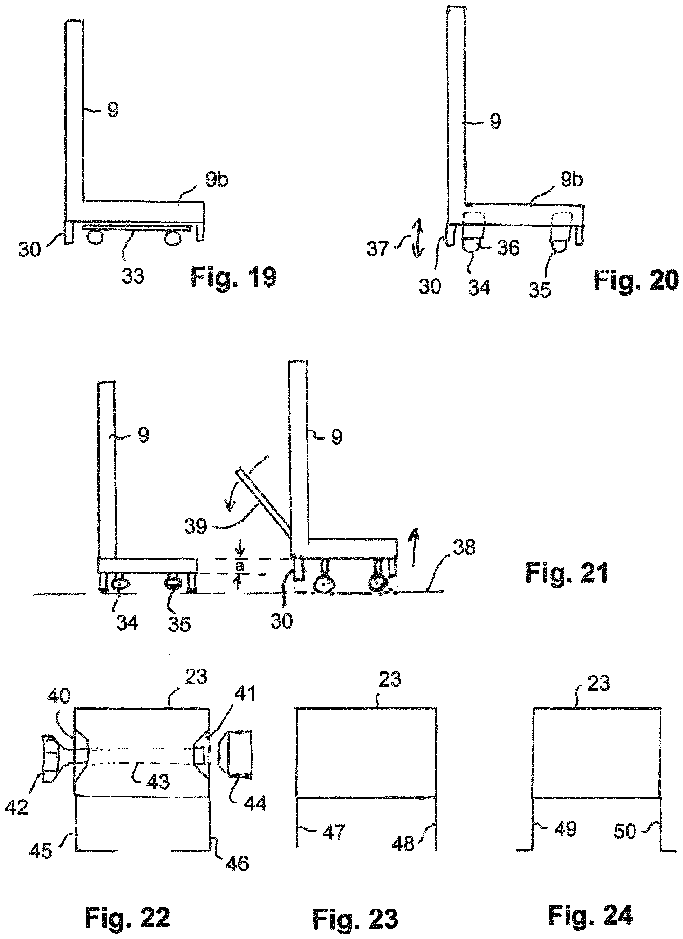

In Figur 19 ist in einer Seitenansicht ein Winkelträger 9 mit einem darunter angeordneten Fahrgestell 33 gezeigt. Das Fahrgestell ist derart bemessen, dass die Füße 30, die unter dem Tragschenkel 9b des Winkelträgers 9 befestigt sind, eine Oberfläche, auf der sich das Fahrgestell 33 bewegt, nicht berühren. Das Fahrgestell 33 ist von dem Winkelträger 9 separierbar, so dass der Winkelträger auf das Fahrgestell aufgesetzt und von diesem abgenommen werden kann. Dies gelingt üblicherweise durch Hochbocken des Winkelträgers mittels eines Gabelstaplers oder eines Hubwagens, worauf das Fahrgestell 33 eingeführt oder entfernt werden kann. Eine Hubvorrichtung kann auch in einen Winkelträger integriert sein.

Figur 20 zeigt eine Konstruktion, bei der zwei Transportrollen 34, 35 mittels passender Halterungen 36 an einem Tragschenkel 9b eines Winkelträgers 9 befestigt sind. Die Halterungen 36 sollten so ausgebildet sein, dass die Transportrollen 34, 35 in senkrechter Richtung, angedeutet durch den Doppelpfeil 37, verfahrbar sind, so dass in einer ersten Position der Winkelträger 9 auf den Transportrollen 34, 35 und in einer zweiten Position auf den Füßen 30 lagert.

In Figur 21 ist schematisch eine Hubvorrichtung für einen Winkelträger 9 gezeigt, die das Anheben des Winkelträgers 9 von einer Oberfläche 38 um einen Betrag a ermöglicht. Die Hubvorrichtung weist einen Hebel 39 auf, der sich in nicht näher dargestellter Weise an der Oberfläche 38 abstützt oder der unmittelbar eine Verlängerung der Füße 30 oder ein Abheben der Füße zum Hochbocken des Winkelträgers 9 bewirkt. Auf diese Weise kann das Gewicht des Transportgestells 9 auf die integrierten Rollen 34, 35 verlagert werden. Es können durch die Hubvorrichtung auch die Rollen gegenüber dem Tragschenkel nach unten vorgeschoben werden. Alternativ kann der Winkelträger auch ohne Rollen aufgebaut sein, und es kann in der erhöhten Position des Winkelträgers ein Fahrgestell 33 unter dieses geschoben werden, und darauf kann der Winkelträger 9 auf das Fahrgestell herabgelassen werden.

Figur 22 zeigt im Querschnitt einen Tragschenkel 23, in dem teleskopisch ausziehbar ein weiterer Tragschenkel 24, wie beispielsweise in Figur 12 dargestellt, fixierbar ist. Es sind Ausnehmungen/Einsenkungen 40, 41 an der Außenseite des Tragschenkels 23 vorgesehen, die den Kopf 42 einer Schraube 43 sowie eine auf diese aufschraubbare Mutter 44 wenigstens teilweise aufnehmen können. Solche Ausnehmungen dienen auch zur Zentrierung der Verbindung und der Verbindungselemente. Sie können an allen Verbindungsstellen des Transportgestells vorgesehen sein. Unterhalb des Tragschenkels 23 sind Füße 45, 46 dargestellt, die als zwei jeweils nach innen rechtwinklig abgebogene Bleche ausgestaltet sind. Die freien Ende der Füße 45, 46 sind einander im Querschnitt zugewandt.

In Figur 23 sind zwei Füße 47, 48 eines Tragschenkels 23 in Form von gerade zur Standfläche nach unten sich erstreckenden Blechen gezeigt.

Figur 24 zeigt im Querschnitt einen Tragschenkel 23 mit zwei Füßen 49, 50, die jeweils als rechtwinklig abgebogene Bleche ausgebildet sind, wobei die freien Enden derart abgebogen und orientiert sind, dass sie im Querschnitt auf voneinander abgewandten Seiten der Füße 49, 50 liegen.

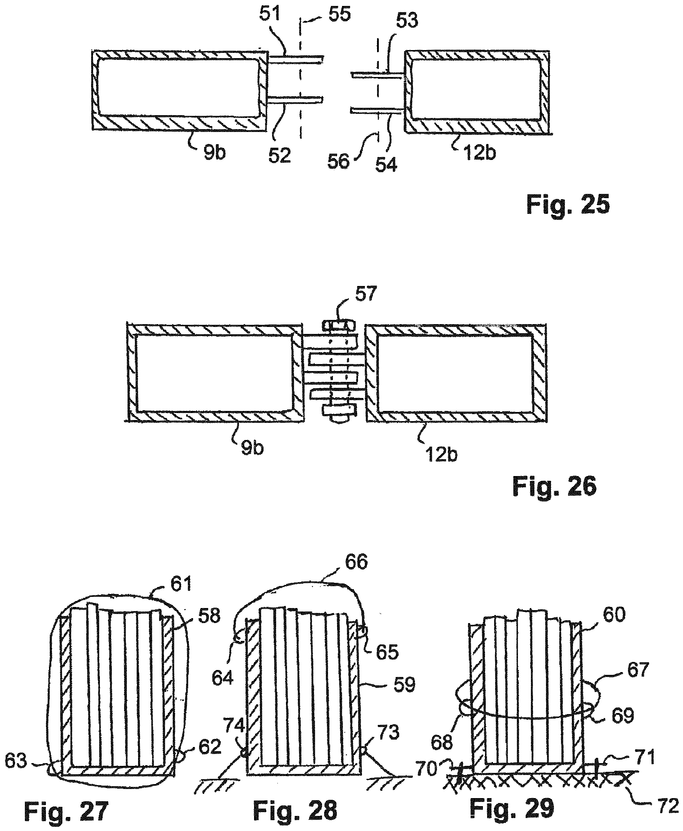

In Figur 25 sind zwei Tragschenkel 9b, 12b im Querschnitt gezeigt, die jeweils an diesen befestigte Laschen 51, 52, 53, 54 aufweisen, wobei die Laschen jeweils durch miteinander fluchtende Öffnungen durchsetzt sind. Die Mittelachsen der Öffnungen sind mit 55, 56 bezeichnet und in Form von gestrichelten Linien dargestellt. Die beiden Tragschenkel 9b, 12b können aneinander angelegt und derart miteinander verbunden werden, dass die Laschen 51, 52, 53, 54 miteinander kämmend angeordnet sind, derart, dass die Achsen 55, 56 der fluchtenden Öffnungen zusammenfallen und eine Schraube oder ein Bolzen 57 zur Kopplung durch alle Öffnungen geschoben und dort fixiert werden kann. Dadurch sind die Tragschenkel 9b, 12b relativ zueinander festgelegt.

Die Figuren 27, 28, 29 zeigen beladene Transportgestelle 58, 59, 60, die durch Spanngurte in unterschiedlichen Konstellationen gesichert sind.

Das Transportgestell 58 der Figur 27 ist durch einen Spanngurt 61 gesichert, der im Querschnitt das gesamte Transportgestell umgibt und die Flachelemente in dem Aufnahmeraum des Transportgestells 58 hält. Der Spanngurt 61 ist schematisch oval dargestellt und wird in Ösen 62, 63 an der Außenseite des Transportgestells 58 geführt.

In Figur 28 ist ein Transportgestell 59 mit Ösen 64, 65 dargestellt, an denen ein Spanngurt 66 befestigt ist, der ebenfalls schematisch dargestellt ist und der nicht das gesamte Transportgestell 59, sondern lediglich den Zwischenraum zwischen den Stützschenkeln an der Oberseite des Transportgestells überspannt. In Figur 28 sind an dem Transportgestell 59 im bodennahen Bereich der Stützschenkel Ösen 73, 74 dargestellt, die der Verspannung des Transportgestells 59 am Boden dienen.

Figur 29 zeigt ein Transportgestell 60, das durch einen Spanngurt 67 gesichert ist. Der Spanngurt umfasst die Stützschenkel der Winkelträger des Transportgestells 60 und ist durch Ösen 68, 69 an den Stützschenkeln geführt. Figur 29 zeigt zusätzlich Laschen 70, 71 im bodennahen Bereich der Winkelträger, die mit dem Boden 72, auf dem das Transportgestell 60 abgestellt ist, mittels einer Schraub- oder Klemmverbindung oder einer formschlüssigen Verbindung verbindbar ist.

In Figur 28 sind an dem Transportgestell 59 im bodennahen Bereich der Stützschenkel Ösen 73, 74 dargestellt, die der Verspannung des Transportgestells 59 am Boden dienen.

Figur 30 zeigt in einer Seitenansicht einen Winkelträger 9, der an den Innenseiten der Schenkel, also des Tragschenkels und des Stützschenkels, mit Schutzprofilen 75, 76 versehen sind, wodurch die zu transportierenden Flachelemente geschont werden sollen. Die Schutzprofile 75, 76 können beispielsweise aus Kunststoff, z. B. einem Thermoplasten, oder aus einem Elastomer, z. B. Gummi, bestehen. Es ist auch eine Herstellung aus Holz oder Papier/Pappe denkbar.

Figur 31 zeigt in einer Seitenansicht ein Transportgestell 58 mit Zusatzträgern 77, 78, 79, die an den Außenseiten der Stützschenkel der Winkelträger, d. h. dem Transportraum des Transportgestells 58 abgewandt, angeordnet sind. Sie können jedoch auch an der Innenseite vorgesehen sein. Die Zusatzträger 77, 78, 79 lassen die Aufnahme von Zusatz- oder Zubehörteilen zu den Flachelementen zu oder können zum Transport anderer Elemente, die unabhängig von den Flachelementen transportiert werden sollen, dienen. Die Zusatzträger 77, 78, 79 können derart lösbar mit den Stützschenkeln verbunden sein, dass sie zum Leertransport abnehmbar und beispielsweise an den Innenseiten der Stützschenkel befestigbar sind. Auf diese Weise kann ein derartiges Transportgestell 58 leer platzsparend transportiert werden.

In Figur 32 ist ein Transportgestell in einer ersten Aufbauform gezeigt, das aus zwei Winkelträgern 80, 81 besteht, die mit ihren Tragschenkeln derart einander zugewandt sind, dass die Tragschenkel 80b, 81b parallel zueinander oder in der gegenseitigen Verlängerung liegen und miteinander verbunden werden können. Das Transportgestell kann auch aus vier Winkelträgern bestehen, die zu zwei gleichen Paaren so zusammengefasst sind, wie dies in Figur 32 gezeigt ist, wobei die Paare jeweils durch Stützkreuze oder andersartige Abstandhalter miteinander verbunden sein können. Die Winkelträger 80, 81 haben unterschiedlich lange Tragschenkel, so dass je nach den Anforderungen aus diesen verschiedene Transportgestelle zusammensetzbar sind.

Figur 33 zeigt beispielhaft eine Anordnung, bei der die Stützschenkel der Winkelträger 80, 81 in einer Linie hintereinander angeordnet sind, wobei die Tragschenkel 80b, 81b auf voneinander abgewandten Seiten der Stützschenkel 80a, 81a angeordnet sind, so dass das Transportgestell zu beiden Seiten der Stützschenkel 80a, 81a Flachelemente aufnehmen kann. Zum Leertransport kann einer der Winkelträger gedreht werden, so dass das Transportgestell verkleinert werden kann. Es kann sinnvoll sein, die Winkelträgeranordnung, die in Figur 33 gezeigt ist, zu verdoppeln, um vier Winkelträger zu einem Transportgestell zusammenzufassen.

Figur 34 zeigt die Verwendung von zwei Winkelträgern 80, 81, wobei der zweite Winkelträger 81 mit dem Winkelträger 80 fluchtend hinter diesem angeordnet und durch verbindende Abstandhalter zu einem Transportgestell vereinigt sein kann.

Somit zeigen die Figuren 32 bis 34 verschiedene Konstellationen, die mit einem oder zwei verschiedenen Winkelträgern 80, 81 oder auch gleich gestalteten Winkelträgern verwirklichbar sind.

Die einzelnen Winkelträger und Winkelträgerpaare können auch in jeder Richtung anbaufähig gestaltet sein, so dass die möglichen Strukturen von Transportgestellen beispielsweise eine Mehrzahl von L- oder U-förmig gestalteten Teil-Transportgestellen aneinandergereiht enthalten können.

Figur 35 zeigt zum Vergleich mit den Figuren 36 und 37 einen Winkelträger 1, bei dem der Stützschenkel und der Tragschenkel winkelsteif miteinander verbunden sind.

Figur 36 zeigt dagegen einen Winkelträger 82, bei dem der Stützschenkel 82a um einen Winkel α gegenüber der Vertikalen 86 geneigt ist, wobei α sich beispielsweise zwischen 0° und 30° bewegen kann. Eine Einstellmöglichkeit des Winkels α kann durch ein feststellbares Gelenk 85 zwischen dem Tragschenkel 82b und dem Stützschenkel 82a gegeben sein.

Es kann auch, wie in Figur 37 gezeigt, vorgesehen sein, dass der Tragschenkel 83b und der Stützschenkel 83a winkelsteif und insbesondere im rechten Winkel miteinander verbunden sind und dass ein Abstandshalter 84 von dem Stützschenkel 83a oder von dem Tragschenkel 83b aus ausschwenkbar ist, derart, dass er zum Anlehnen des Transportguts in Schrägstellung dient.

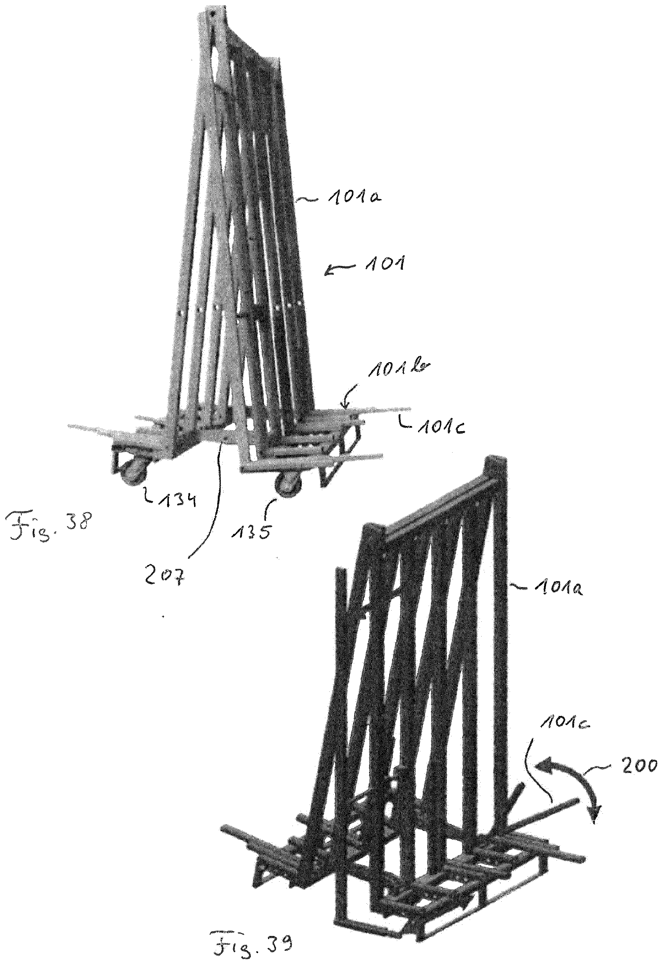

Die Figuren 38 und 39 zeigen in perspektivischer Darstellung jeweils ein Transportgestell mit zwei Winkelträgern 101, die schräg in A-Form aneinander angelehnt bzw. miteinander verbunden sind. In der Figur 38 ist weiter mit 101a ein Stützschenkel des Winkelträgers 101 bezeichnet und mit 101b ein Tragschenkel. Besonders hervorgehoben ist der Tragschenkel 101c, der ausgeschwenkt ist und über andere Bereiche des/der Tragschenkel hinausragt. Im Aufbau des Transportgestells ist weiter dargestellt, dass die beiden Winkelträger an ihren oberen Enden mittels eines Drehgelenks bzw. einer Drehachse miteinander verbunden sind, so dass sie zwischen einer platzsparenden eingeklappten Stellung und einer ausgeklappten Transportstellung gegeneinander schwenkbar sind. Die Figur 38 zeigt die auseinandergeklappte Stellung, bei der im unteren Bereich nahe den Tragschenkeln die beiden Winkelträger durch einen zwischen diesen angeordneten Abstandhalter 207 voneinander beabstandet und miteinander verbunden sind.

In der Figur 38 ist zudem dargestellt, dass unter den Tragschenkeln jeweils eine Tragrolle 134, 135 angeordnet ist, durch die das Transportgestell fahrbar ist.

In der Figur 39 ist ein Transportgestell ohne Transportrollen dargestellt, wobei im Detail verschiedene Positionen des ausschwenkbaren Tragschenkels 101c dargestellt sind sowie mit dem Pfeil 200 die mögliche Ausschwenkrichtung zwischen einer ersten Stellung, in der der Tragschenkel 101c an den Stützschenkel 101a angelegt ist, und einer zweiten, ausgeschwenkten Stellung, in der der Tragschenkel 101c im Wesentlichen horizontal ausgerichtet ist.

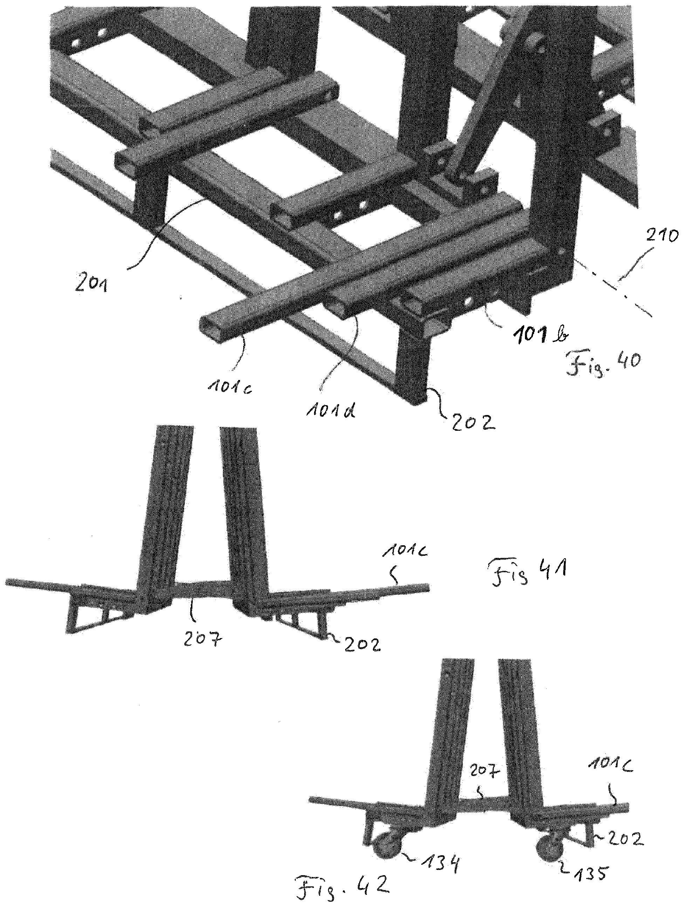

Die Figur 40 zeigt ein Detail eines Winkelträgers eines Transportgestells im Bereich der Tragschenkel, wobei im Detail die ausschwenkbaren Tragschenkel 101c, 101d und 101e dargestellt sind. Dabei stellt 101c den längsten der Tragschenkel, 101d den mittleren und 101e den kürzesten der ausschwenkbaren Tragschenkel dar. Dadurch, dass unterschiedlich lange Tragschenkel ausschwenkbar zur Verfügung gestellt werden, kann beim Ausschwenken derjenige Tragschenkel ausgewählt werden, der dem für das Transportgut notwendigen Platzbedarf entspricht. Das Transportgestell nimmt dann nicht mehr Platz ein als notwendig. Die ausschwenkbaren Tragschenkel 101c und 101d sind an dem Verbindungsgerüst 201 der Tragschenkel um die Achse 208 schwenkbar gelagert.

In der Figur 41 ist perspektivisch ein Transportgestell mit zwei Winkelträgern dargestellt, wobei der Abstandshalter 207 zwischen den Winkelträgern sowie ein Fuß 202 unter einem Tragschenkel 101c erkennbar ist.

In der Figur 42 ist dagegen ein Transportgestell mit zwei Winkelträgern dargestellt, welches auf Transportrollen 134, 135 ruht. Es sind zusätzlich Füße 202 vorgesehen, auf denen das Transportgestell nach Einklappen der Transportrollen 134, 135 abgesetzt werden kann. Das Absetzen des Transportgestells kann beispielsweise mittels eines Hubwagens geschehen, mittels dessen das Transportgestells zunächst angehoben wird, um die Transportrollen 134, 135 seitwärts einzuschwenken. Danach wird das Transportgestell wieder abgelassen, so dass es auf den Füßen 202 ruht.

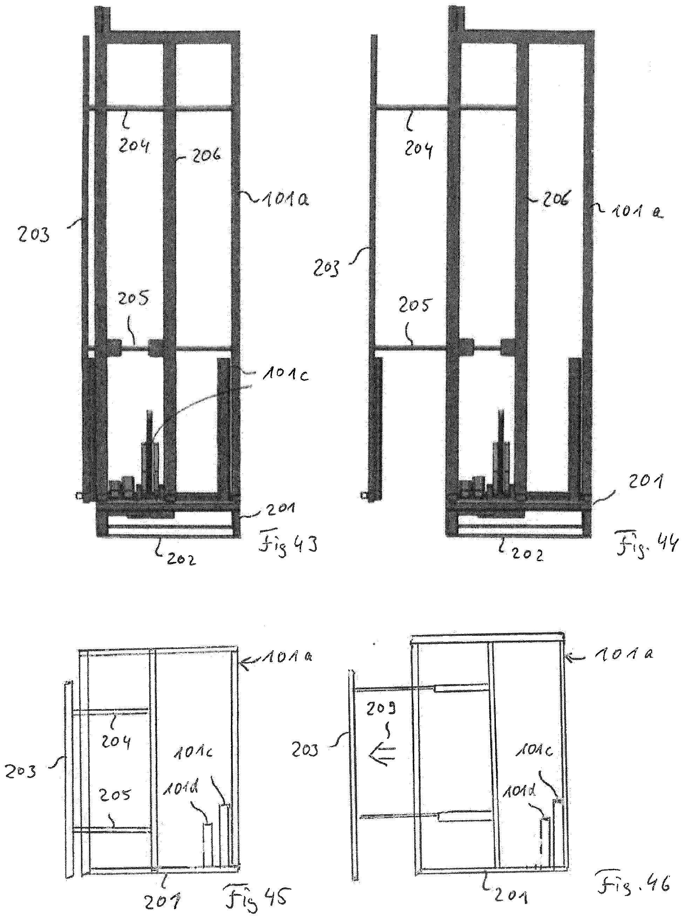

In den Figuren 43 und 45 ist jeweils ein Transportgestell in perspektivischer Darstellung (Figur 43) und in schematischer Darstellung (Figur 45) dargestellt. Es ist jeweils ein Stützschenkel 101a dargestellt, der mehrere vertikale Holme 206 aufweist. An einem mittleren vertikalen Holm 206 sind Abstandshalter 204, 205 in Form von Teleskopstangen befestigt, an denen ein ausziehbarer Stützschenkel 203 befestigt ist.

Zudem ist in dem in Figur 43 dargestellten Transportgestell ein ausschwenkbarer Tragschenkel 101c dargestellt, während in dem in Figur 45 dargestellten Transportgestell zwei verschieden lange ausschwenkbare Tragschenkel 101c, 101d dargestellt sind.

Die Figuren 44 und 46 zeigen ein Transportgestell, wobei Figur 44 eine perspektivische Ansicht und Figur 46 eine schematische Ansicht des Winkelträgers 101 mit dem Stützschenkel 101a zeigt. In der Darstellung der Figuren 44, 46 ist der Stützschenkel 203 in Richtung des Pfeils 209 zur Verlängerung des Stützschenkels 101a mittels Teleskopstangen/Abstandshalter 204, 205 ausgefahren. Damit ergibt sich eine Verlängerung des Winkelträgers in Richtung des Pfeils 209.

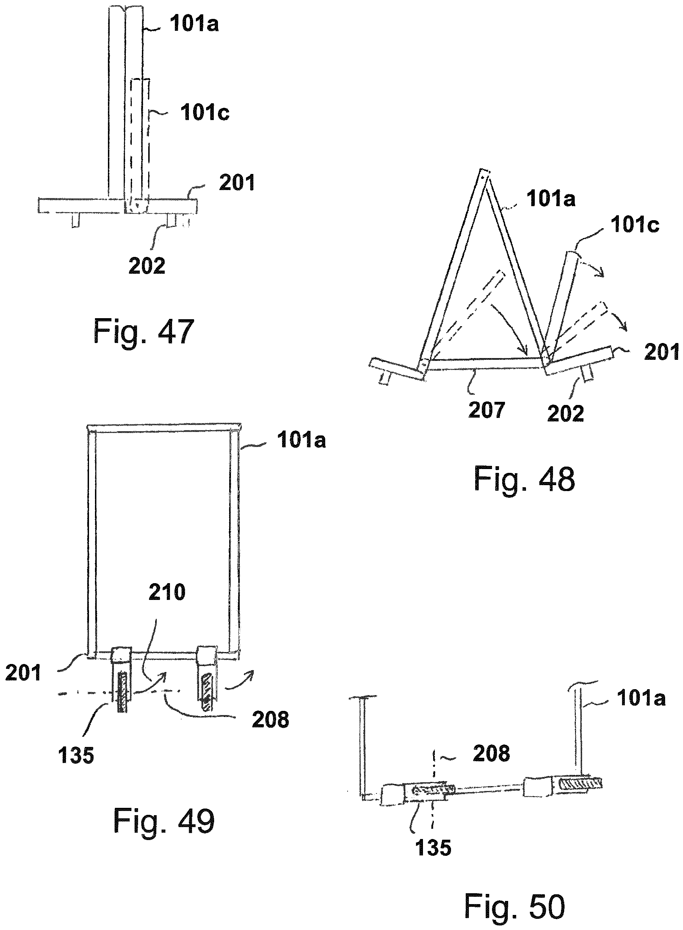

In der Figur 47 ist ein Transportgestell mit zwei Winkelträgern dargestellt, wobei die Winkelträger derart zueinander angeordnet sind, dass ihre Stützschenkel aneinander anliegen. Der Stützschenkel 101a ist mit einem Verbindungsgestell 201 für die mit dem Stützschenkel 101a zusammenwirkenden Tragschenkel verbunden. Zudem ist ein ausschwenkbarer Tragschenkel 101c in der eingeschwenkten Stellung, d.h. angelegt an den Stützschenkel 101a, dargestellt.

In der Figur 48 ist das Transportgestell aus der Figur 47 in einer ausgeklappten Stellung gezeigt, wobei die beiden Stützschenkel 101a dachartig gelenkig miteinander verbunden sind und im unteren Bereich nahe den Tragschenkeln durch einen Abstandshalter 207 zueinander beabstandet festgelegt sind. Die Stützschenkel 101a sind jeweils mit Verbindungsgerüsten 201 verbunden, die einen Tragschenkel bilden oder eine Auflage für zusätzliche - beispielsweise verlängerte -Tragschenkel in der ausgeschwenkten Position bieten können. Mit dem Verbindungsgerüst 201 können mehrere Tragschenkel fest verbunden sein, und weitere Tragschenkel können auf dieses Gerüst aufgelegt sein oder auflegbar sein.

In der Figur 49 ist ein Stützschenkel 101a schematisch vereinfacht dargestellt, der an seinem unteren Ende mit einem Verbindungsgerüst 201 für Tragschenkel verbunden ist. Das Verbindungsgerüst 201 ist auf Tragrollen 135 gelagert, so dass das Transportgestell fahrbar ist. Die Tragrollen 135 sind in der fahrbaren Position um die horizontale Rotationsachse 108 drehbar.

Mit einem Pfeil 210 ist veranschaulicht, in welche Richtung jede der Tragrollen 135 zum Verbindungsgerüst 201 hin einschwenkbar ist. Das Gewicht des Transportgestells kann bei eingeschwenkten Transportrollen 135 auf einem oder mehrere Füße abgesetzt werden, die in der Figur 49 nicht dargestellt sind.

Die Figur 50 zeigt den unteren Bereich des Transportgestell, das in der Figur 49 gezeigt ist, mit eingeschwenkten Transportrollen 135. Im eingeschwenkten Zustand der Transportrollen ist die Rotationsachse 208 vertikal gerichtet. Auch in der Figur 50 sind die starren Füße des Transportgestells der Übersichtlichkeit halber weggelassen.

Durch die dargestellte Konstruktion ist das beschriebene Transportgestell vielseitig einsetzbar und für verschiedene Lasten bezüglich des Platzes, der in Anspruch genommen wird, anpassbar. Sollen derartige Transportgestelle leer transportiert werden, so lassen sie sich mit minimalem Platzbedarf transportieren.

## Patentansprüche

1. Transportgestell zum Transport von strangförmigen Elementen oder von Flachelementen (4, 5, 6) mit wenigstens einem Winkelträger (1, 2, 9, 10, 11, 12, 15, 17, 28, 80, 81, 101), der einen Tragschenkel (1b, 2b, 9b, 10b, 11b, 12b, 15b, 17b, 28b, 80b, 81b, 101b, 101c, 101d) und einen Stützschenkel (1a, 2a, 9a, 10a, 11a, 12a, 15a, 17a, 28a, 80a, 81a, 101a, 203) aufweist, wobei das Transportgestell derart eingerichtet ist, dass das Gewicht der zu transportierenden Flachelemente beim Transport überwiegend auf dem/den Tragschenkeln ruht, wobei zwei, drei oder mehr Tragschenkel (101c, 101d) an einem Teil des Transportgestells zwischen einer ausgeschwenkten Stellung und einer eingeschwenkten Stellung schwenkbar befestigt sind, wobei die Tragschenkel in der ausgeschwenkten Stellung Flachelemente (4, 5, 6) aufnehmen können und in der eingeschwenkten Stellung an die Stützschenkel (101a) angelegt sind, **dadurch gekennzeichnet, dass** die zwei, drei oder mehr Tragschenkel verschieden lang sind.

2. Transportgestell nach Anspruch 1, **dadurch gekennzeichnet, dass** es wenigstens zwei Winkelträger (1, 2, 9, 10, 11, 12, 15, 17, 28, 80, 81) aufweist, die mit einander zugewandten, parallel zueinander oder teleskopartig ineinander geschobenen Tragschenkeln (1b, 2b, 9b, 10b, 11b, 12b, 15b, 17b, 28b, 80b, 81b) miteinander verbunden sind.

3. Transportgestell nach Anspruch 1 oder 2, **dadurch gekennzeichnet, dass** es wenigstens zwei Winkelträger (1, 2, 9, 10, 11, 12, 15, 17, 28, 80, 81) aufweist, die im Abstand voneinander angeordnet sind, wobei jeweils die Tragschenkel (1b, 2b, 9b, 10b, 11b, 12b, 15b, 17b, 28b, 80b, 81b, 101b, 101c, 101d) und die Stützschenkel (1a, 2a, 9a, 10a, 11a, 12a, 15a, 17a, 28a, 80a, 81a, 101a, 203) parallel zueinander angeordnet sind und wobei jeweils zwei Stützschenkel und/oder zwei Tragschenkel mittels wenigstens eines bezüglich seiner Länge einstellbaren Abstandshalters (7, 8, 13, 14, 204, 205) miteinander verbunden sind.

4. Transportgestell nach Anspruch 3, **dadurch gekennzeichnet, dass** der/die Abstandshalter (204, 205) teleskopartig ausziehbar ist/sind.

5. Transportgestell nach Anspruch 3 oder 4, **dadurch gekennzeichnet, dass** wenigstens vier Winkelträger vorgesehen sind, die paarweise mit einander zugewandten, parallel zueinander oder teleskopartig ineinander geschobenen Tragschenkeln (1b, 2b, 9b, 10b, 11b, 12b, 15b, 17b, 28b, 80b, 81b) miteinander verbunden sind, wobei jeweils Paare von Winkelträgern (1, 2, 9, 10, 11, 12, 15, 17, 28, 80, 81) mittels wenigstens eines bezüglich seiner Länge einstellbaren Abstandshalters (7, 8, 13, 14, 204, 205) miteinander verbunden sind.

6. Transportgestell nach Anspruch 4 oder 5, **dadurch gekennzeichnet, dass** wenigstens ein, insbesondere zwei oder mehr Abstandshalter (7, 8, 13, 14) jeweils als Stützkreuz mit zwei mittels eines Drehgelenks gelenkig miteinander verbundenen Abstandsarmen (7a, 7b) ausgebildet ist/sind.

7. Transportgestell nach einem der Ansprüche 1 bis 6, **dadurch gekennzeichnet, dass** jeder der Winkelträger (1, 2, 9, 10, 11, 12, 15, 17, 28, 80, 81) eine Mehrzahl von voneinander entlang der Länge eines Stützschenkels oder eines Tragschenkels beabstandeten Fixierelementen (22, 42, 43, 44) aufweist, die der Verbindung mit einem Tragschenkel oder einem Stützschenkel desselben Winkelträgers oder eines anderen Winkelträgers oder der Verbindung mit einem Abstandshalter (7, 8, 13, 14) in einer von mehreren möglichen Positionen dienen.

8. Transportgestell nach Anspruch 7, **dadurch gekennzeichnet, dass** die Fixierelemente Bohrungen, Ausnehmungen, Langlöcher, Nuten, Erhebungen, Bolzen, Stifte oder Stege aufweisen oder durch diese gebildet sind.

9. Transportgestell nach einem der Ansprüche 1 bis 8, **dadurch gekennzeichnet, dass** die Tragschenkel (1b, 2b, 9b, 10b, 11b, 12b, 15b, 17b, 28b, 80b, 81b) und/oder die Stützschenkel (1a, 2a, 9a, 10a, 11a, 12a, 15a, 17a, 28a, 80a, 81a) Fußelemente (20, 21, 30, 31, 32, 45, 46, 47, 48 49, 50, 202) zur Beabstandung von einer Aufstellfläche aufweisen, wobei die Fußelemente insbesondere eine im Querschnitt klauenförmige Struktur zur Sicherung an einem Zinken eines Gabelstaplers aufweisen.

10. Transportgestell nach einem der Ansprüche 1 bis 9, **dadurch gekennzeichnet, dass** die Tragschenkel (1b, 2b, 9b, 10b, 11b, 12b, 15b, 17b, 28b, 80b, 81b) und/oder die Stützschenkel (1a, 2a, 9a, 10a, 11a, 12a, 15a, 17a, 28a, 80a, 81a) jeweils als Hohlprofile, insbesondere als Rechteck-Hohlprofile oder als U-Profile oder L-Profile, ausgebildet sind.

11. Transportgestell nach einem der Ansprüche 1 bis 10, **dadurch gekennzeichnet, dass** jeweils zwei Tragschenkel (9, 12, 23, 24) teleskopartig ineinander oder horizontal nebeneinander angeordnet sind und jeweils durchgehende, miteinander fluchtende Bohrungen oder Langlöcher aufweisen, die gemeinsam zur Fixierung von stabförmigen Elementen (22), insbesondere Schrauben oder Bolzen, durchsetzt sind.

12. Transportgestell nach einem der Ansprüche 1 bis 11, **dadurch gekennzeichnet, dass** die Stützschenkel (2a) Kranösen (25) aufweisen oder mit Kranösen (27) aufweisenden Elementen (26) verbunden sind.

13. Transportgestell nach einem der Ansprüche 1 bis 12, **gekennzeichnet durch** ein Fahrgestell (33) mit Rollen oder Vorrichtungen (36) zur Befestigung von Tragrollen (34, 35) an den Tragschenkeln und insbesondere durch eine Hubvorrichtung (39), die die Verlagerung der Traglast auf Tragrollen ermöglicht.

14. Transportgestell nach einem der Ansprüche 1 bis 13, **dadurch gekennzeichnet, dass** an einem Teil des Transportgestells, insbesondere an einem oder mehreren Tragschenkeln (101b), jeweils eine oder mehrere Rollen (34, 35) befestigt ist/sind, wobei jede der Rollen zwischen einer ersten Stellung und einer zweiten Stellung schwenkbar ist, wobei in der ersten Stellung die Rotationsachse (208) der jeweiligen Rolle horizontal gerichtet und das Transportgestell fahrbar ist und in der zweiten Stellung die Rotationsachse der jeweiligen Rolle vertikal gerichtet ist.

15. Transportgestell nach einem der Ansprüche 1 bis 14, **dadurch gekennzeichnet, dass** ein Identifizierungselement (82) in das Transportgestell integriert oder mit diesem verbunden ist, welches eine Identifizierung des Transportgestells ermöglicht,
oder dass die Trag- und/oder die Stützschenkel auf ihrer der Last zugewandten Seite mit Schutzprofilen (75, 76) versehen sind
oder dass Vorrichtungen zur Befestigung von Zusatzträgern (77, 78, 79) an den Stützschenkeln (1a, 2a, 9a, 10a, 11a, 12a, 15a, 17a, 28a, 80a, 81a) vorgesehen sind, wobei die Zusatzträger zur Aufnahme von Werkstücken insbesondere auf der dem Innenraum des Transportgestells abgewandten Seite geeignet sind.

## Claims

1. A transport frame for transporting strand-shaped elements or flat elements (4, 5, 6), having at least one angle bracket (1, 2, 9, 10, 11, 12, 15, 17, 28, 80, 81, 101) which has a carrying leg (1b, 2b, 9b, 10b, 11b, 12b, 15b, 17b, 28b, 80b, 81b, 101b, 101c, 101d) and a supporting leg (1a, 2a, 9a, 10a, 11a, 12a, 15a, 17a, 28a, 80a, 81a, 101a, 203), the transport frame being configured such that the weight of the flat elements to be transported rests predominantly on the carrying leg(s) during transport, two, three or more supporting legs (101c, 101d) being attached to one part of the transport frame between a pivoted-out position and a pivoted-in position, the carrying legs being able to accommodate flat elements (4, 5, 6) in the pivoted-out position and being in contact with the supporting legs (101a) in the pivoted-in position, **characterized in that** the two, three or more supporting legs are of different lengths.

2. The transport frame according to claim 1, **characterized in that** it has at least two angle brackets (1, 2, 9, 10, 11, 12, 15, 17, 28, 80, 81), the carrying legs (1b, 2b, 9b, 10b, 11b, 12b, 15b, 17b, 28b, 80b, 81b) facing one another, parallel to one another or pushed telescopically into one another being connected to one another.

3. The transport frame according to claim 1 or 2, **characterized in that** it has at least two angle brackets (1, 2, 9, 10, 11, 12, 15, 17, 28, 80, 81) arranged at a distance from one another, wherein in each case the carrying legs (1b, 2b, 9b, 10b, 11b, 12b, 15b, 17b, 28b, 80b, 81b, 101b, 101c, 101d) and the supporting legs (1a, 2a, 9a, 10a, 11a, 12a, 15a, 17a, 28a, 80a, 81a, 101a, 203) are arranged parallel to one another and wherein two supporting legs and/or two carrying legs are connected to one another by means of at least one spacer (7, 8, 13, 14, 204, 205) that is adjustable in terms of its length.

4. The transport frame according to claim 3, **characterized in that** the spacer(s) (204, 205) can be telescopically extendable.

5. The transport frame according to claim 3 or 4, **characterized in that** at least four angle brackets are provided, the paired carrying legs (1b, 2b, 9b, 10b, 11b, 12b, 15b, 17b, 28b, 80b, 81b) facing one another, parallel to one another or telescopically pushed into one another being connected to one another, wherein pairs of angle brackets (1, 2, 9, 10, 11, 12, 15, 17, 28, 80, 81) are connected to one another by means of at least one spacer (7, 8, 13, 14, 204, 205) that is adjustable in terms of its length.

6. The transport frame according to claim 4 or 5, **characterized in that** at least one, in particular two or more spacers (7, 8, 13, 14) is/are each designed as a cross support with two spacer arms (7a, 7b) connected in an articulated manner to one another by means of a rotary joint.

7. The transport frame according to any one of claims 1 to 6, **characterized in that** each of the angle brackets (1, 2, 9, 10, 11, 12, 15, 17, 28, 80, 81) has a plurality of fixing elements (22, 42, 43, 44) spaced apart from one another along the length of a supporting leg or a carrying leg, the fixing elements being used for connection to a carrying leg or a supporting leg of the same angle bracket or another angle bracket or connection to a spacer (7, 8, 13, 14) in one of a plurality of possible positions.

8. The transport frame according to claim 7, **characterized in that** the fixing elements have or are formed by bores, recesses, elongated holes, grooves, elevations, bolts, pins or webs.

9. The transport frame according to any one of claims 1 to 8, **characterized in that** the carrying legs (1b, 2b, 9b, 10b, 11b, 12b, 15b, 17b, 28b, 80b, 81b) and/or the supporting legs (1a, 2a, 9a, 10a, 11a, 12a, 15a, 17a, 28a, 80a, 81a) have foot elements (20, 21, 30, 31, 32, 45, 46, 47, 48 49, 50, 202) for spacing from an installation surface, wherein the foot elements have in particular a claw-shaped structure in cross-section for securing to a tine of a forklift truck.

10. The transport frame according to any one of claims 1 to 9, **characterized in that** the carrying legs (1b, 2b, 9b, 10b, 11b, 12b, 15b, 17b, 28b, 80b, 81b) and/or the supporting legs (1a, 2a, 9a, 10a, 11a, 12a, 15a, 17a, 28a, 80a, 81a) are each designed as hollow profiles, in particular as rectangular hollow profiles or as U-profiles or L-profiles.

11. The transport frame according to any one of claims 1 to 10, **characterized in that** each two carrying legs (9, 12, 23, 24) are arranged telescopically one inside the other or horizontally next to one another and each have continuous bores or elongated holes that are aligned with each other, the continuous bores or elongated holes being interspersed together for fixing rod-shaped elements (22), in particular screws or bolts.

12. The transport frame according to any one of claims 1 to 11, **characterized in that** the supporting legs (2a) have crane eyes (25) or are connected to elements (26) having crane eyes (27).

13. The transport frame according to any one of claims 1 to 12, **characterized by** a chassis (33) having rollers or devices (36) for attaching carrying rollers (34, 35) to the carrying legs and in particular by a lifting device (39) which enables the bearing load to be shifted to carrying rollers.

14. The transport frame according to any one of claims 1 to 13, **characterized in that** one or more rollers (34, 35) is/are attached to a part of the transport frame, in particular to one or more carrying legs (101b), wherein each of the rollers is pivotable between a first position and a second position, wherein in the first position, the axis of rotation (208) of the respective roller is oriented horizontally and the transport frame is moveable and in the second position, the axis of rotation of the respective roller is oriented vertically.

15. The transport frame according to any one of claims 1 to 14, **characterized in that** an identification element (82) is integrated into the transport frame or connected thereto, the identification element enabling the transport frame to be identified, or that the carrying and/or the supporting legs are provided with protective profiles (75, 76) on their side facing the load
or that devices for attaching additional carriers (77, 78, 79) to the supporting legs (1a, 2a, 9a, 10a, 11a, 12a, 15a, 17a, 28a, 80a, 81a) are provided, wherein the additional carriers are suitable for accommodating workpieces, in particular on the side facing away from the interior of the transport frame.

## Revendications

1. Cadre de transport permettant le transport d'éléments en forme d'écheveaux ou d'éléments plats (4, 5, 6) avec au moins une équerre (1, 2, 9, 10, 11,12, 15, 17, 28, 80, 81, 101), qui présente un côté support (1b, 2b, 9b, 10b, 11b, 12b, 15b, 17b, 28b, 80b, 81b, 101b, 101c, 101d) et une côté d'appui (1a, 2a, 9a, 10a, 11a, 12a, 15a, 17a, 28a, 80a, 81a, 101a, 203), où le cadre de transport est conçu de telle manière que le poids des éléments plats à transporter repose principalement sur le/les côté/s support/s, où deux, trois ou plus de côtés supports (101c, 101d) sont fixées en étant pivotables sur une partie du cadre de transport entre une position déployée et une position rétractée, où les côtés supports peuvent recueillir des éléments plats (4, 5, 6) dans la position déployée et sont plaqués contre les côtés d'appui (101a) dans la position rétractée, **caractérisé en ce que** les deux, trois ou plus de côtés supports sont de longueurs différentes.

2. Cadre de transport selon la revendication 1, **caractérisé en ce qu'**il présente au moins deux équerres (1, 2, 9, 10, 11, 12, 15, 17, 28, 80, 81) qui sont reliées ensemble avec des côtés supports (1b, 2b, 9b, 10b, 11b, 12b, 15b, 17b, 28b, 80b, 81b) orientés les uns vers les autres, parallèles les uns aux autres ou insérés les uns dans les autres de manière télescopique.

3. Cadre de transport selon la revendication 1 ou la revendication 2, **caractérisé en ce qu'**il présente au moins deux équerres (1, 2, 9, 10, 11, 12, 15, 17, 28, 80, 81) qui sont disposées avec un espace entre elles, dans lequel les côtés supports (1b, 2b, 9b, 10b, 11b, 12b, 15b, 17b, 28b, 80b, 81b, 101b, 101c, 101d) et les côtés d'appui (1a, 2a, 9a, 10a, 11a, 12a, 15a, 17a, 28a, 80a, 81a, 101a, 203) sont respectivement disposés parallèlement les uns par rapport aux autres et dans lequel respectivement deux côtés d'appui, et/ou deux côtés supports, sont reliés l'un à l'autre au moyen d'au moins un espaceur (7, 8, 13, 14, 204, 205) réglable en ce qui concerne sa longueur.

4. Cadre de transport selon la revendication 3, **caractérisé en ce que** l'espaceur/les espaceurs (204, 205) peut/peuvent être déployé/s de manière télescopique.

5. Cadre de transport selon la revendication 3 ou la revendication 4, **caractérisé en ce qu'**au moins quatre équerres sont prévues, qui sont reliées les unes aux autres par paires avec des côtés supports (1b, 2b, 9b, 10b, 11b, 12b, 15b, 17b, 28b, 80b, 81b) orientés les uns vers les autres, parallèles les uns aux autres ou insérés les uns dans les autres de manière télescopique, dans lequel respectivement des paires d'équerres (1, 2, 9, 10, 11, 12, 15, 17, 28, 80, 81)sont reliées les unes aux autres au moyen d'au moins d'un espaceur (7, 8, 13, 14, 204, 205) réglable en ce qui concerne sa longueur.

6. Cadre de transport selon la revendication 4 ou la revendication 5, **caractérisé en ce qu'**au moins un, en particulier deux, ou plus d'espaceurs (7, 8, 13, 14) sont conçus respectivement conçus sous forme de croix de support avec deux bras d'espacement (7a, 7b) reliés l'un à l'autre en étant articulés au moyen d'un pivot.

7. Cadre de transport selon l'une des revendications 1 à 6, **caractérisé en ce que** chacune des équerres (1, 2, 9, 10,11, 12,15, 17, 28, 80, 81) présente une multiplicité d'éléments de fixation (22, 42, 43, 44) séparés espacés les uns des autres sur la longueur d'un côté d'appui ou d'un côté support, qui servent à la liaison avec un côté support ou un côté d'appui de la même équerre ou d'une autre équerre ou à la liaison avec un espaceur (7, 8, 13, 14) dans une parmi de multiples positions possibles.

8. Cadre de transport selon la revendication 7, **caractérisé en ce que** les éléments de fixation présentent des alésages, des cavités, des trous oblongs, des rainures, des élévations, des boulons, des goupilles ou des barres ou sont formés par ceux-ci.

9. Cadre de transport selon l'une des revendications 1 à 8, **caractérisé en ce que** les côtés supports (1b, 2b, 9b, 10b, 11b, 12b, 15b, 17b, 28b, 80b, 81b) et/ou les côtés d'appui (1a, 2a, 9a, 10a, 11a, 12a, 15a, 17a, 28a, 80a, 81a) présentent des éléments de socle (20, 21, 30, 31, 32, 45, 46, 47, 48 49, 50, 202) permettant l'espacement par rapport à une surface de dépose, où les éléments de socle présentent en particulier une structure en forme de griffes dans la section transversale permettant la fixation d'une dent d'un chariot élévateur.

10. Cadre de transport selon l'une des revendications 1 à 9, **caractérisé en ce que** les côtés supports (1b, 2b, 9b, 10b, 11b, 12b, 15b, 17b, 28b, 80b, 81b) et/ou les côtés d'appui (la, 2a, 9a, 10a, 11a, 12a, 15a, 17a, 28a, 80a, 81a) sont respectivement conçus sous forme de profilés creux, notamment sous forme de profilés creux à angles droits ou sous forme de profilés en U ou de profilés en L.

11. Cadre de transport selon l'une des revendications 1 à 10, **caractérisé en ce que** respectivement deux côtés supports (9, 12, 23, 24) sont disposés l'un à l'intérieur de manière télescopique, ou l'un à côté de l'autre de manière horizontale et présentent respectivement des alésages ou des trous oblongs traversants, alignés les uns par rapport aux autres qui sont traversés ensemble pour la fixation d'éléments (22) en forme de tiges, notamment de vis ou de boulons.

12. Cadre de transport selon l'une des revendications 1 à 11, **caractérisé en ce que** les côtés supports (2a) présentent des œillets de levage (25) ou sont reliés avec des éléments (26) présentant des œillets de levage (27).

13. Cadre de transport selon l'une des revendications 1 à 12, **caractérisé par** un châssis de transport (33) avec des rouleaux ou des dispositifs (36) permettant la fixation de rouleaux supports (34, 35) sur les côtés supports et en particulier par un dispositif de levage (39), qui permet le déplacement de la charge à porter sur des rouleaux supports.

14. Cadre de transport selon l'une des revendications 1 à 13, **caractérisé en ce qu'**au niveau d'une partie du cadre de transport, en particulier, sur un ou plusieurs côtés supports (101b), un ou plusieurs rouleaux (34, 35) est/sont fixé/s, où chacun des rouleaux est pivotable entre une première position et une deuxième position, où l'axe de rotation (208) du rouleau respectif est orienté horizontalement dans la première position et le cadre de transport est accessible et l'axe de rotation du rouleau respectif est orienté verticalement dans la deuxième position.

15. Cadre de transport selon l'une des revendications 1 à 14, **caractérisé en ce qu'**un élément d'identification (82) est intégré dans le cadre de transport ou est relié avec celui-ci, lequel permet une identification du cadre de transport, ou que les côtés supports et/ou les côtés d'appui sont munis de profilés de protection (75, 76) sur le côté orienté vers leur charge
ou que des dispositifs permettant la fixation de supports complémentaires (77, 78, 79) sur les côtés supports (1a, 2a, 9a, 10a, 11a, 12a, 15a, 17a, 28a, 80a, 81a) sont prévus, où les supports complémentaires sont appropriés pour la réception de pièces de fabrication, en particulier sur le côté opposé à l'espace intérieur du cadre de transport.
